**Europäisches Patentamt**

**European Patent Office**

**Office européen des brevets**

(19)

(11) Veröffentlichungsnummer: **0 249 774**
**A1**

(12) # EUROPÄISCHE PATENTANMELDUNG

(21) Anmeldenummer: **87107573.5**

(51) Int. Cl.⁴: **B 23 K 37/02**, B 25 J 19/06

(22) Anmeldetag: **25.05.87**

(30) Priorität: **16.06.86 DE 3620258**

(71) Anmelder: **MESSER GRIESHEIM GMBH, Hanauer Landstrasse 330, D-6000 Frankfurt/Main 1 (DE)**

(43) Veröffentlichungstag der Anmeldung: **23.12.87**
**Patentblatt 87/52**

(72) Erfinder: **Bauer, Bernd, Arminusstrasse 25, D-6057 Dietzenbach (DE)**
Erfinder: **Haase, Wolfgang, Rohrstrasse 6, D-6050 Offenbach (DE)**
Erfinder: **Zankl, Peter, Mönchbruchstrasse 28, D-6090 Rüsselheim (DE)**

(84) Benannte Vertragsstaaten: **AT BE CH FR GB IT LI NL SE**

(54) **Führungsmaschine.**

(57)    Die Erfindung betrifft eine Führungsmaschine mit einem Brennerhalter und einem zwischen Brennerhalter (10) und Führungsmaschine (11) angeordneten Kollisionsschutz (12), welcher zwei elastisch miteinander verbundene Bauteile (13, 14) aufweist, die bei einer Kollosion über eine Lageveränderung, vorzugsweise eine Unterbrechung der Maschinenbewegung auslösen.
Um das Gewicht und die Baulänge des Kollisionsschutzes (12) zu verringern und eine hohe Wiederholgenauigkeit bei der Einstellung der Brennermittenposition zu erreichen, sind die Bauteile (13, 14) als kraftbeaufschlagter Kegelsitz (30, 49) ausgebildet.

MESSER GRIESHEIM GMBH　　　　　　　MG 1567

Kennwort: Roboterbrennerhalter　　　EM 1259

Erfinder: Bauer　　　　　　　　　　Ordner: XXIV
　　　　　Haase
　　　　　Zankl


## Führungsmaschine

Die Erfindung betrifft eine Führungsmaschine mit einem
Brennerhalter und einem zwischen Brennerhalter und Führungsmaschine angeordneten Kollisionsschutz, welcher zwei elastisch
miteinander verbundene Bauteile aufweist, die bei einer
Kollision über eine Lageveränderung vorzugsweise eine Unterbrechung der Maschinenbewegung auslösen.

Die Bearbeitung von Werkstücken mit einer insbesondere
komplizierten Werkstückkontur erfolgt in der Regel auf
einer programmierbaren Führungsmaschine, die in jede beliebige Position innerhalb ihres Verfahrbereiches über
die in der Steuerung abgelegten Weginformationen verfahren werden kann. Aufgrund der komplizierten und zeitaufwendigen Aufbereitung einer vorgegebenen Bearbeitungsfolge in eine Datenfolge (Programm),die vom Computer oder der Steuerung verarbeitet werden kann, sind diese Steuerdaten in der Praxis fehlerbehaftet und führen zu einem großen Kollisionsrisiko, insbesondere während des Einfahrens. Die Möglichkeit der Kollision des Brenners mit dem Werkstück oder den Werkstückpositionier- und Haltevorrichtungen nimmt mit den Freiheitsgraden (Achsen) der Führungsmaschine und der Peripheriegeräte zu.

Um eine Zerstörung des Werkzeugs und/oder Werkzeughalters und/oder Werkstücks bei einer Kollision zu verhindern, ist es bei einem Industrieroboter bekannt, zwischen Brennerhalter und Roboterarm einen Kollisionsschutz anzuordnen. Der bekannte Kollisionsschutz besteht im wesentlichen aus einem koaxial an dem Roboterarm befestigten Abstandsbolzen, an dessen freiem Ende eine Unterplatte befestigt ist. Über der Unterplatte ist eine mit dem Brennerhalter verbundene Oberplatte angeordnet, die von einer auf dem mittigen Abstandsbolzen angeordneten Feder gegen das Unterteil gepreßt wird. An der zum Unterteil weisenden Seite des Oberteils sind im Außenbereich Kugeln angeordnet, denen eine umlaufende Kugelführung im Unterteil zugeordnet ist. Bei einer Kollision wird das mit dem Brennerhalter und damit mit dem Brenner verbundene Oberteil gegen die in der Mitte des Oberteils wirkende Kraftrichtung der Feder angehoben und somit die Zerstörung des Brenners und/oder Brennerhalters und/oder Werkstücks verhindert.

Nachteilig ist bei diesem Brennerhalter neben dem relativ hohen Gewicht und der Baulänge, daß aufgrund der konstruktiven Ausführung eine nur unzureichende Wiederholgenauig-

...

keit der Brennermittenposition eingestellt werden kann.
Dabei vergrößern sich im Kollisionsschutz erzeugte Ungenauigkeiten durch schlechte Zentrierung aufgrund des Abstandes des Brennerhalters von der Mittelachse des
Kollisionsschutzes bis zu einem vielfachen an dem Arbeitspunkt des Brenners.

Aus dem deutschen Gebrauchsmuster 84 09 904.6 ist ein
aus einem Oberteil und einem Unterteil bestehender
Kollisionsschutz bekannt, wobei das Unterteil mit dem
Brennerhalter und das Oberteil über einen federbeaufschlagten Befestigungsbolzen und einem mit dem Befestigungsbolzen in Eingriff stehenden Kegelstift mit dem Unterteil verbunden ist. Die Zentrierung des Oberteils zum Unterteil erfolgt
über in dem Außenbereich des Oberteils angeordnete Auflagebolzen, die in kegelförmige Vertiefungen des Unterteils
eingreifen.

Nachteilig bei dieser Konstruktion ist, daß einerseits
viele Einzelbauteile gefertigt und montiert werden müssen
und andererseits aufgrund des mittigen Kraftangriffs der
Feder und der im Außenbereich liegenden Zentrierungen
ebenfalls nur eine unzureichende Wiederholgenauigkeit
der Brennermittenposition erreicht werden kann. Bei
parallel zur Mittelachse des Befestigungsbolzens angeordnetem Brenner und senkrechtem Kraftangriff bei einer
Kollision, ist der Kollisionsschutz nicht wirksam.

Der Erfindung liegt die Aufgabe zugrunde, die im Stand
der Technik geschilderten Nachteile zu vermeiden und
bei einem Kollisionsschutz das Gewicht und die Baulänge
zu verringern und die Wiederholgenauigkeit bei der Einstellung der Brennermittenposition zu vergrößern.

...

MG 1567 — 4 — 13.Juni 1986

0249774

Diese Aufgabe wird erfindungsgemäß dadurch gelöst, daß die Bauteile als kraftbeaufschlagter Kegelsitz ausgebildet sind.

Duch die Ausbildung des Ober- und Unterteils als Kegelsitz auf welchen unmittelbar vorzugsweise Federkräfte wirken, wird der Kraftangriffspunkt bei einer Kollision von der Mittelachse weg zu dem an den äußeren Flächen des Ober- und Unterteils gebildeten Kegelsitz verschoben und hierdurch der Abstand zwischen Brennerhalter und Kollisionsschutz verringert. Vorteilhaft wird hierdurch in Verbindung mit den als Kegelstumpf ausgebildeten Flächen des Ober- bzw. Unterteils eine große Wiederholgenauigkeit der Brennermittenposition bei geringem Gewicht und kurzer Baulänge des Kollisionsschutzes erreicht. Damit der Kollisionsschutz sowohl bei senkrecht wie bei seitlich angreifenden Kräften wirksam ist, verjüngen sich die als Kegelstumpf ausgebildeten Flächen zum Brennerhalter hin.

Vorteilhaft sind die Bauteile als Hohlkörper ausgebildet, die nach dem Zusammenbau ein geschlossenes Gehäuse bilden, so daß innerhalb der Bauteile die elastischen Teile, insbesondere Federn, sowie die Schalter für die vorzugsweise Unterbrechung der Maschinenbewegung verschmutzungssicher angeordnet werden können. Durch die Ausbildung als Hohlkörper wird gleichzeitig eine Verringerung des Gewichtes erreicht. Die Federn wirken mit ihren zum Brennerhalter gerichteten Enden auf die als Kegelstumpf ausgebildete Fläche des Unterteils und mit ihren zur Führungsmaschine gerichteten Enden auf das als Oberteil ausgebildete zweite Bauteil.

...

Vorteilhaft ist in jedem zur Führungsmaschine gerichteten Ende der Federn jeweils eine Kugel gelagert, die in eine zwischen dem Oberteil und den Federn angeordnete Teilscheibe mit umlaufender Kugelführung eingreifen. Die Teilscheibe weist vorteilhaft bei vorgegebenen Gradzahlen Rasten auf, in die die Kugeln bei entsprechender Stellung des Brenners einrasten. Hierdurch wird es vorteilhaft möglich, den Brenner in einer vorgegebenen Ausgangsposition exakt zu positionieren.

Um zu vermeiden daß sich die Federn während einer Kollision zu sehr verwinden oder verbiegen, sind die als Druckfedern ausgebildeten Federn in Bohrungen des Unterteils außen zentriert und durch jeweils zwei mit Abstand in den Druckfedern angeordneten Büchsen innen zentriert.

Vorteilhaft sind in dem Unterteil drei Schalter befestigt, deren Schaltkontakte bei aneinanderliegenden Kegelflächen mit am Oberteil befestigten Schaltnocken in Verbindung stehen. Beim Lösen der Verbindung erzeugen die Schalter ein Signal zum vorzugsweisen Abschalten der Bewegung der Führungsmaschine. Hierdurch wird automatisch bei zu großer Auslenkung des Unterteils mit den Federn vorzugsweise eine Unterbrechung der Maschinenbewegung erzeugt. Selbstverständlich ist es auch möglich, zusätzliche Schalter vorzusehen, so daß beispielsweise die zusätzlichen Schalter ein Signal bei der Berührung des Brenners mit einem Hindernis erzeugen, das einem akkustischen oder optischen Anzeigegerät zuführbar ist und über die anderen Schalter das Abschalten der Maschinenbewegung erfolgt.

Vorzugsweise wird der Kollisionsschutz an der sechsten Achse eines Gelankarmroboters angeordnet.

...

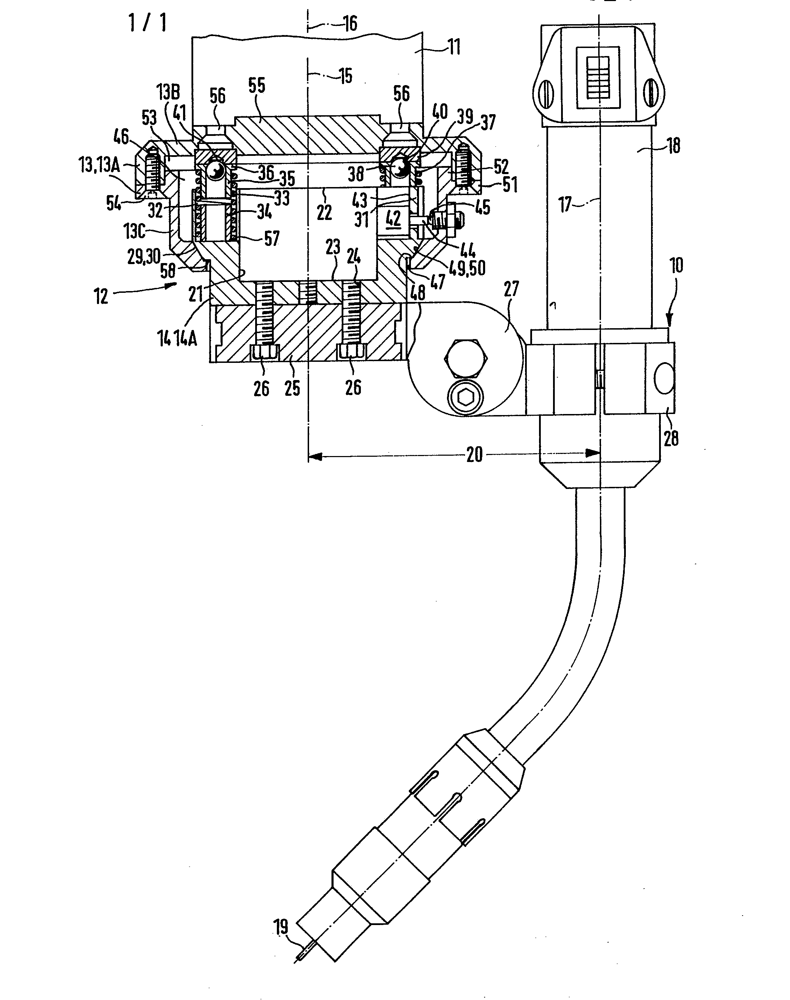

Ein Ausführungsbeispiel der Erfindung ist in der Zeichnung dargestellt und wird im folgenden näher beschrieben.

In der Zeichnung ist der zwischen Brennerhalter 10 und sechster Achse der als Gelenkarmroboter ausgebildeten Führungsmaschine 11 angeordnete Kollisionsschutz in seiner Gesamtheit mit 12 bezeichnet. Der Kollisionsschutz 12 besteht im wesentlichen aus zwei Bauteilen 13,14, wobei das Bauteil 14 aus einem mit dem Brennerhalter 10 verbundenen einteiligen Unterteil 14A besteht und das andere Bauteil 13 aus einem zweiteilig aus Deckel 13B und Verbindungsteil 13C bestehenden Oberteil 13A gebildet ist. Die Bauteile 13,14 sind vorzugsweise als Drehteile ausgebildet und weisen nach dem Zusammenbau eine gemeinsame Mittelachse 15 auf. Auf der Verlängerung der Mittelachse 15 des Kollisionsschutzes 12 liegt die Mittelachse 16 der sechsten Achse der Führungsmaschine 11, während die Mittelachse 17 des vorzugsweise als Schweißbrenner mit abschmelzender Elektrode 19 ausgebildeten Brenners 18 in einem Abstand 20 zur Mittelachse 15 des Kollisionsschutzes 12 angeordnet ist. Das Unterteil weist eine Zentralbohrung 21 auf, deren Öffnung 22 zu dem Deckel 13B und deren plane Stirnfläche 23 zu dem Brennerhalter 10 weist. In der Stirnfläche 23 sind Gewindedurchgangsbohrungen 24 angeordnet, über die das Unterteil 14A mit einer Befestigungsplatte 25 des Brennerhalters 10 verbunden ist. Als Verbindungselemente dienen Schrauben 26. Die Befestigungsplatte 25 ist über ein Gelenk 27 zur Neigungseinstellung des Brenners 18 mit dem Halter 28 für den Brenner 18 verbunden.

...

Das Unterteil 14A weist eine im wesentlichen zylindrische abgestufte Außenkontur auf, dessen Außenfläche 29 im Übergangsbereich zwischen durchmesserkleinerem und durchmessergrößeren Teilbereich als Kegelstumpf 30 mit sich zum Brennerhalter hin verjüngender Außenfläche 29 ausgebildet ist. An die durchmesserkleinste Stelle des Kegelstumpfes 30 schließt sich eine kreisringförmige Fläche 58 an.

In der Wand 31 des durchmessergrößeren Teilbereiches des Unterteils 14A sind vorzugsweise drei um 120° versetzt angeordnete Bohrungen 32 vorgesehen, in denen vorzugsweise als elastische Teile 33 ausgebildete Spiraldruckfedern angeordnet sind. In den Spiraldruckfedern 33 sind jeweils zwei Büchsen 34 und 35 angeordnet, wobei die Büchse 35 einen gegenüber dem Innendurchmesser der Spiraldruckfedern 33 durchmessergrößeren Halteflansch 36 aufweist, mit dem sie auf dem zum Deckel 13B gerichteten Ende 37 der Spiraldruckfeder 33 aufliegt. In den Büchsen 35 ist jeweils eine Kugel 38 gelagert, die von der Spiraldruckfeder auf eine zwischen dem Deckel 13B und den Kugeln 38 angeordnete Teilscheibe 39 mit nicht näher dargestellter umlaufender Kugelführung 40 gepreßt wird. Bei vorgegebenen Gradzahlen sind in der Kugelführung 40 vorzugsweise drei Rasten 41 um jeweils 120° versetzt angeordnet, in die die Kugeln 38 in bestimmter Stellung des Brenners 18 einrasten und somit den Brenner 18 in vorgegebener Ausgangslage fixieren. Die Teilscheibe 39 ist in einer ringförmigen Ausnehmung des Deckels 13 B fixiert.

Selbstverständlich ist es auch möglich, den Deckel 13B und die Teilscheibe 39 einstückig auszubilden.

Zwischen den Bohrungen 32 für die Spiraldruckfedern 33 sind in dem durchmessergrößeren Teilbereich der

...

Wand 31 Befestigungsflächen 43 für vorzugsweise drei Schalter 42 vorgesehen, deren Schaltkontakte 44 durch die Befestigungsflächen 43 ragen und mit an dem Verbindungsteil 13C befestigten Schaltnocken 45 in Verbindung stehen. Vorzugsweise sind die drei Schalter ebenfalls um 120° versetzt angeordnet.

Das Verbindungsteil 13C besteht im wesentlichen aus einem den durchmessergrößeren Teilbereich des Unterteils 14A umgreifenden rohrförmigen Hohlkörper, der eine abgestufte Zentralbohrung 46 aufweist, deren zum Brennerhalter 10 gerichtete Öffnung 47 nur unwesentlich größer wie der durchmesserkleinere Teilbereich des Unterteils 14A ist. An die Öffnung 47 schließt sich ein kleiner, als Kreisring ausgebildeter ebener Bereich 48 an, von dem aus sich eine in Richtung der Führungsmaschine 11 erweiternde und als Kegelstumpf 49 ausgebildete Innenfläche 50 erstreckt. Nach der durchmessergrößten Stelle des Kegelstumpfes 49 ist die Zentralbohrung 46 durchmessergrößer freigedreht. In diesem Bereich ist der oben erwähnte und mit dem Schaltkontakt 44 in Verbindung stehende Schaltnocken 45 befestigt.

In dem zum Deckel 13B weisenden Bereich ist das Verbindungsteil 13C als Halteflansch 51 mit kreisförmiger Innenanlagefläche 52 ausgebildet, mit welcher der Deckel 13B über seine Öffnung 53 zentriert wird. Über durch den Halteflansch 51 geführte Schrauben 54 wird der Deckel 13B mit dem Verbindungsteil 13C verbunden.

Vorteilhaft weist der Deckel 13B an seinem zur Führungsmaschine 11 gerichteten Ende einen Zentrierflansch 55 und links und rechts des Zentrierflansches angeordnete Durchgangsbohrungen 56 für die Befestigung an der Führungsmaschine 11 auf.

Im zusammengebauten Zustand umgreift das Oberteil 13A
das Unterteil 14A, wobei der an der Außenfläche 29 des
Unterteils 14A vorgesehene Kegelstumpf 30 über die Federkraft
der Spiraldruckfedern 33 an den an der Innenfläche 50 des
Verbindungsteils 13C vorgesehenen Kegelstumpf 49 angepreßt wird. Über diesen Kegelsitz 30,49 wird die Brennermittenposition während der Bearbeitung durch die mit ihren
Enden 37, 57 gegen das Oberteil 13A und das Unterteil
14A wirkenden Federkräfte exakt zentriert. Der am durchmesserkleinsten Bereich des Kegelstumpfes 49 des Verbindungsteils 13C sich anschließende ebene Bereich 48, der
auf der Fläche 58 des Unterteils 14A liegt fixiert vorteilhaft eine Endhöhenstellung des Brenners 18. Fährt
der Brenner 18 gegen ein Hindernis, so hebt sich das
Unterteil 14A mit dem Brenner 18 von der als Kegelstumpf 49
ausgebildeten Innenfläche 50 des Oberteils 14A entgegen der Kraftwirkung der Spiraldruckfedern 33 ab. Wird
dabei ein bestimmter Abstand zwischen Unterteil 14A und
Verbindungsteil 13C überschritten lösen sich die Schaltkontakte 44 von den Schaltnocken 45 und die Schalter 42
erzeugen ein Signal, das vorzugsweise zur Abschaltung der
Maschinenachsen verwendet wird. Selbstverständlich ist
es auch möglich, das Signal zur optischen oder akustischen Anzeige zu verwenden. Durch die vorteilhafte Anordnung der Spiraldruckfedern, der Teilscheibe 39, der
Kugelführung 40, der Büchsen 34,35 sowie der Schalter
42 und der Schaltkontakte 44 sowie der Schaltnocken
45 innerhalb der als Hohlkörper ausgebildeten Bauteile
13 und 14 sind diese bei der Bearbeitung von Werkstücken,
insbesondere beim Schweißen von Werkstücken, gegen die

...

0249774

hierbei auftretenden Umwelteinflüsse, wie Schweißspritzer und dgl. geschützt, wodurch eine hohe Standzeit und Funktionssicherheit des Kollisionsschutzes gewährleistet ist. Der Kollisionsschutz 12 ist unabhängig von der während der Kollision auf ihn einwirkenden Kraftrichtung funktionsfähig. Durch den an den Bauteilen 13,14 direkt vorgesehenen Kegelsitz 30,49, auf den Federkräfte der Spiraldruckfedern 33 direkt, d. h. nahezu ohne Hebelarm wirken, wird eine hohe Wiederholgenauigkeit der Brennermittenposition nach jeder Kollision ermöglicht.

Gr/Ha
EM 1259

MG 1567                                        13.Juni 1986

### Ansprüche

1. Führungsmaschine mit einem Brennerhalter und einem zwischen Brennerhalter und Führungsmaschine angeordneten Kollisionsschutz, welcher zwei elastisch miteinander verbundene Bauteile aufweist, die bei einer Kollision über eine Lageveränderung vorzugsweise eine Unterbrechung der Maschinenbewegung auslösen,
dadurch gekennzeichnet,
daß die Bauteile(13,14)als kraftbeaufschlagter Kegelsitz (30,49) ausgebildet sind.

2. Führungsmaschine nach Anspruch 1,
dadurch gekennzeichnet,
daß das eine Bauteil (14) aus einem mit dem Brennerhalter (10) verbundenen Unterteil (14A) besteht, das eine als Kegelstumpf (30) ausgebildete Außenfläche (29) aufweist, an der das mit der Führungsmaschine (11) verbundene zweite Bauteil (13) mit einer ebenfalls als Kegelstumpf (49) ausgebildeten Fläche (50) anliegt.

3. Führungsmaschine nach Anspruch 1 oder 2,
dadurch gekennzeichnet,
daß die als Kegelstumpf (30,49) ausgebildeten Flächen (29,50) sich zum Brennerhalter (10) hin verjüngen.

4. Führungsmaschine nach einem der Ansprüche 1 bis 3,
dadurch gekennzeichnet,
daß die Bauteile (13,14) als Hohlkörper ausgebildet sind, die nach dem Zusammenbau ein geschlossenes Gehäuse bilden.

5. Führungsmaschine nach einem der Ansprüche 1 bis 4,
   dadurch gekennzeichnet,
   daß innerhalb der Bauteile (13,14) elastische Teile
   (33) angeordnet sind, die mit ihrem zum Brennerhalter
   (10) gerichteten Enden (57) auf die als Kegelstumpf
   (30) ausgebildete Fläche (29) des Unterteils (14A)
   und mit ihren zur Führungsmaschine (11) gerichteten
   Enden (37) auf das als Oberteil (13A) ausgebildete
   zweite Bauteil (13) wirken.

6. Führungsmaschine nach einem der Ansprüche 1 bis 5,
   dadurch gekennzeichnet,
   daß die elastischen Teile (33) als Druckfedern
   ausgebildet sind, in deren zur Führungsmaschine (11)
   gerichteten Enden (37) jeweils eine Kugel (38) gelagert ist.

7. Führungsmaschine nach einem der Ansprüche 1 bis 6,
   dadurch gekennzeichnet,
   daß zwischen dem Oberteil (13A) und den Druckfedern
   (33) eine Teilscheibe (39) mit umlaufender Kugelführung
   (40) angeordnet ist, die auf vorgegebenen Gradzahlen
   Rasten (41) aufweist, in die die Kugeln bei entsprechender Stellung des Brenners (18) einrasten.

8. Führungsmaschine nach einem der Ansprüche 1 bis 7,
   dadurch gekennzeichnet,
   daß die Druckfedern (33) in Bohrungen (32) des Unterteils (14A) außen zentriert und durch jeweils zwei
   mit Abstand in den Druckfedern (33) angeordnete
   Büchsen (34,35) innen zentriert sind.

...

9. Führungsmaschine nach einem der Ansprüche 1 bis 8,
   dadurch gekennzeichnet,
   daß in dem Unterteil (14A)      Schalter (42) befestigt sind, deren Schaltkontakte (44) bei aneinanderliegenden Flächen (29,50) mit      an dem Oberteil
   (13A) befestigten Schaltnocken (45) in Verbindung stehen   und beim Lösen der Verbindung die Schalter (42)
   ein Signal zum vorzugsweise Abschalten der Bewegung
   der Führungsmaschine (11) erzeugen.

10. Führungsmaschine nach einem der Ansprüche 1 bis 9,
    gekennzeichnet durch
    die Ausbildung als Gelenkarmroboter mit sechs Achsen.

Gr/Ha
EM 1259

0249774

Europäisches Patentamt

**EUROPÄISCHER RECHERCHENBERICHT**

Nummer der Anmeldung

| EINSCHLÄGIGE DOKUMENTE | | | EP 87107573.5 |
|---|---|---|---|
| **Kategorie** · | Kennzeichnung des Dokuments mit Angabe, soweit erforderlich, der maßgeblichen Teile | **Betrifft Anspruch** | **KLASSIFIKATION DER ANMELDUNG (Int. Cl.4)** |
| X | <u>DD - A - 207 669</u> (LIST) | 1 | B 23 K 37/02 |
| A | * Fig. 2-4 * | 2-10 | B 25 J 19/06 |
| | -- | | |
| X | <u>DD - A3 - 230 470</u> (VEB-IFA) | 1 | |
| | * Fig. 1 * | | |
| | -- | | |
| X | <u>DD - A1 - 225 384</u> (ZENTRALES FORSCHUNGSINST.) | 1 | |
| | * Fig. * | | |
| | -- | | |
| A | <u>DE - A1 - 3 004 014</u> (JUNGHEINRICH) | 1 | |
| | * Fig. 1 * | | |
| | ---- | | **RECHERCHIERTE SACHGEBIETE (Int. Cl.4)** |
| | | | B 23 K 37/00 |
| | | | B 25 J 19/00 |

Der vorliegende Recherchenbericht wurde für alle Patentansprüche erstellt.

| Recherchenort | Abschlußdatum der Recherche | Prüfer |
|---|---|---|
| WIEN | 21-09-1987 | BENCZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument ·
L : aus andern Gründen angeführtes Dokument

& : Mitglied der gleichen Patentfamilie, übereinstimmendes Dokument

EPA Form 1503 03 82